# EUROPEAN PATENT APPLICATION

(11) **EP 2 846 275 A1**
(43) Date of publication of application: **11.03.2015**
(21) Application number: 14183017.4
(22) Date of filing: 01.09.2014
(51) Int. Cl.: G06F 17/30, G06F 3/01

(54) **Mobile terminal and control method thereof**

(30) Priority: 04.09.2013 KR 20130106269
(71) Applicant: LG Electronics, Inc., Seoul 150-721 (KR)
(72) Inventor: Kim, Hakmin, 137-893 Seoul (KR)
(74) Representative: Cabinet Plasseraud

(57) **Abstract**

A mobile terminal according to the present invention can obtain data based on an eye tracking result with respect to an execution screen of a particular application and provide a dedicated search function with respect to data obtained according to an eye tracking result.

## Description

### CROSS-REFERENCE TO RELATED APPLICATIONS

This application claims the benefit of earlier filing date and right of priority to Korean Patent Application No. 10-2013-0106269, filed on September 4, 2013.

### BACKGROUND OF THE INVENTION

### Field of the invention

The present invention relates to a mobile terminal and more particularly, to a mobile terminal capable of obtaining part of data displayed on a screen based on an execution result of eye tracking and providing a dedicated search function with respect to data obtained based on eye tracking.

### Related Art

As functions of a terminal such as a personal computer, notebook, mobile phone, and smart phone are diversified, the terminal is now implemented in the form of a multimedia player equipped with multi-functions for capturing pictures or video, playing music or video files, game, and receiving broadcasting programs.

To support and enhance the increasing number of functions in a terminal, improving structural part and/or software part of the terminal is now being considered. As various types of terminals today, including mobile terminals, provide various complex functions, a menu structure is accordingly getting more complicated.

In particular, according to the recent advancement of image analysis technology, research on how to apply a user interface method employing an eye tracking function to a mobile terminal is actively conducted.

### SUMMARY OF THE INVENTION

The present invention relates to a mobile terminal and more particularly, a mobile terminal capable of obtaining part of data displayed on a screen based on an execution result of eye tracking and providing a dedicated search function with respect to data obtained from the eye tracking.

To achieve the technical object above, a mobile terminal according to one embodiment of the present invention comprises a camera obtaining an eye image of the user; a display unit displaying an execution screen of a particular application; a storage unit; and a controller.

The controller can carry out eye tracking with respect to an execution screen of the particular application based on an eye image of the user obtained by the camera; select part of the execution screen of the particular application based on an execution result of eye tracking; obtain data displayed on part of the execution screen of the selected particular application and store the data on the memory; and provide a dedicated search function based on data obtained based on eye tracking.

The controller can store the obtained data in a dedicated storage area of the memory assigned for storing data obtained based on eye tracking and limit a search range of the dedicated search function to the dedicated storage area.

The controller can select part of the particular content based on at least one of a time duration of the user's glance at the content and the number of times the user's glance is recognized.

The controller can display an indicating means indicating that an eye tracking function is under execution on an execution screen of the particular application.

The controller can further obtain path information corresponding to an execution screen of the particular application and store the path information in the dedicated storage area by associating the information with the obtained data. If the obtained data displayed on the display unit is selected according to an execution result of the dedicated search function, the controller can display the execution screen of the particular application on the display unit.

The controller can obtain text displayed on part of an execution screen of the selected particular application and store the text in the dedicated storage area. If a search request based on words included in the stored text is received, the controller can search the stored text and display a search result on the display unit.

The controller can further obtain additional information with respect to the obtained data, which includes at least one of information about the particular application, information about content executed by the particular application, and information about acquisition time of the obtained data; and store the additional data in the dedicated storage area by associating the additional data with the obtained data.

The controller can provide a dedicated search function with respect to data obtained based on the dedicated storage eye tracking by using words corresponding to the additional information.

The controller can store images displayed on part of an execution screen of the selected particular application on the dedicated storage area and provide the dedicated search function with respect to the stored images based on words corresponding to the additional information.

In case the obtained data is displayed on the display unit as an execution result of the dedicated search function, the controller can display the additional information together with the obtained data.

In case an execution result of the dedicated search function is displayed on the display unit, the controller can provide at least one of a re-search function within the execution result of the dedicated search function by using the additional information and a sorting function with respect to the execution result of the dedicated search function by using the additional function.

To solve the technical problem above, a mobile terminal according to another embodiment of the present invention comprises a camera obtaining an eye image of the user; a display unit displaying an execution screen of a particular application; a storage unit; and a controller carrying out eye tracking with respect to an execution screen of the particular application based on the eye image of the user, selecting part of the execution screen of the particular application based on an execution result of eye tracking, obtaining a capture image of part of the execution screen of the selected particular application, obtaining search data corresponding to the captured image based on an execution state of the particular application, storing the captured image and the search data in the storage unit by associating the captured image and the search data with each other, and providing a dedicated search function with respect to an captured image from eye tracking based on the search data.

The controller can store the captured image and the search data in a dedicated storage area of the memory allocated to store data obtained based on eye tracking and limit a search range of the dedicated search function to the dedicated storage area.

If the dedicated search function is executed and a search word corresponding to the search data is received, the controller can display the captured image on the display unit.

The search data corresponding to the captured image includes path information corresponding to an execution screen of the particular application, and if the captured image display on the display unit is selected according to an execution result of the dedicated search function, an execution screen of the particular application can be displayed on the display unit.

In case the captured image is displayed on the display unit as an execution result of the dedicated search function, the controller can display at least part of the search data together with the captured image.

The specifics of other embodiments are provided in the corresponding detailed descriptions and drawings.

A mobile terminal according to the present invention and a method for controlling a mobile terminal provide the following advantageous effects.

A mobile terminal according to the present invention can obtain and store part of data displayed on a screen by reflecting an eye tracking result.

A mobile terminal according to the present invention can provide a dedicated search function with respect to data obtained and stored according to an eye tracking result.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention.
FIG. 1 is a block diagram of a mobile terminal according to an embodiment;
FIG. 2 shows a flow diagram illustrating one example of a method for controlling a mobile terminal according to the present invention;
FIG. 3 shows an example where data are obtained and stored based on eye tracking according to a method for controlling a mobile terminal of FIG. 2;
FIG. 4 shows an example of a user interface provided according as a search function dedicated to obtained data based on eye tracking provided by a mobile terminal according to the present invention is carried out;
FIG. 5 show an example of providing the original content that the user has read based on a search result from obtained data based on eye tracking in a mobile terminal according to the present invention;
FIGs. 6 to 9 show examples of a user interface related to eye tracking provided by a mobile terminal according to the present invention;
FIG. 10 show examples of displaying a means indicating that eye tracking is under execution in a mobile terminal according to the present invention;
FIG. 11 illustrates examples of storing data obtained according to the user's glance as a result of eye tracking in a storage unit in a mobile terminal according to the present invention;
FIG. 12 shows other examples where data are obtained through an execution screen of a particular application from an eye tracking result in a mobile terminal according to the present invention;
FIG. 13 is a flow diagram illustrating another example of a method for controlling a mobile terminal according to the present invention;
FIG. 14 shows one example of a result of dedicated search with respect to data obtained from eye tracking provided by a mobile terminal according to the present invention;
FIGs. 15 to 17 show examples of additional functions utilizing a result of dedicated search with respect to data obtained based on eye tracking, provided by a mobile terminal according to the present invention;
FIG. 18 shows examples where items displayed on an execution screen of a particular application are changed according to an eye tracking result in a mobile terminal according to the present invention;
FIG. 19 is a flow diagram illustrating a yet another example of a method for controlling a mobile terminal according to the present invention;
FIGs. 20 to 22 illustrate one example of a process where a method for controlling a mobile terminal of FIG. 19 is carried out; and
FIG. 23 illustrates a still another example of data acquisition and storage based on eye tracking carried out in a mobile terminal according to the present invention.

### DESCRIPTION OF EXEMPLARY EMBODIMENTS

Arrangements and embodiments may now be described more fully with reference to the accompanying drawings, in which exemplary embodiments may be shown. Embodiments may, however, be embodied in many different forms and should not be construed as being limited to embodiments set forth herein; rather, embodiments may be provided so that this disclosure will be thorough and complete, and will fully convey the concept to those skilled in the art.

A mobile terminal may be described below with reference to the accompanying drawings. In the following description, suffixes "module" and "unit" may be given to components of the mobile terminal in consideration of only facilitation of description and do not have meanings or functions discriminated from each other.

The mobile terminal may include a cellular phone, a smart phone, a laptop computer, a digital broadcasting terminal, personal digital assistants (PDA), a portable multimedia player (PMP), a navigation system and/or so on.

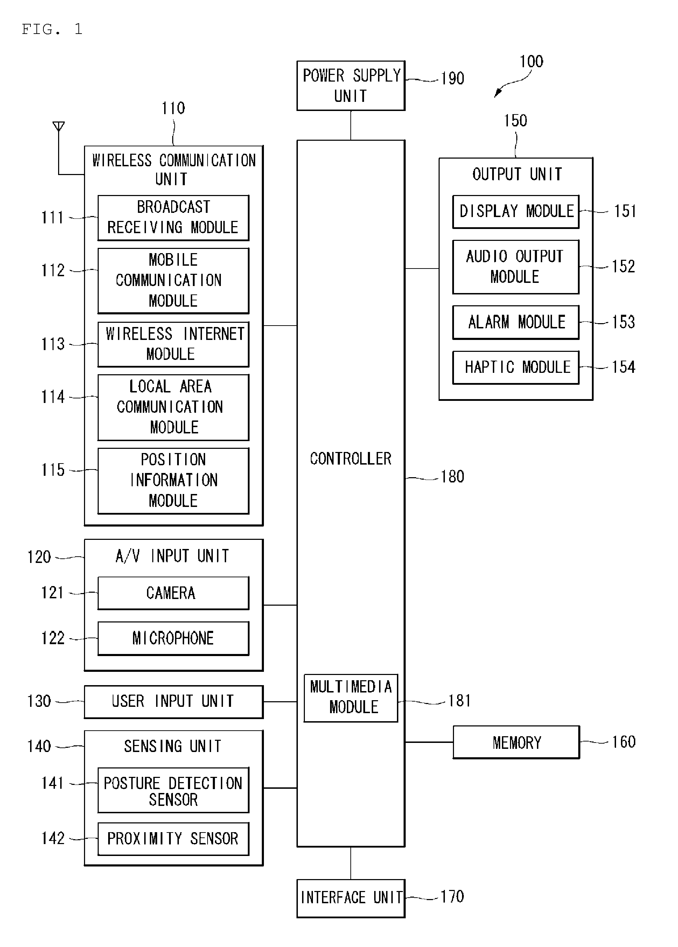

FIG. 1 is a block diagram of a mobile terminal according to an embodiment. Other embodiments, configurations and arrangements may also be provided.

As shown, the mobile terminal 100 may include a wireless communication unit 110 (or radio communication unit), an audio/video (A/V) input unit 120, a user input unit 130, a sensing unit 140, an output unit 150, a memory 160, an interface 170, a controller 180, and a power supply unit 190. The components shown in FIG. 1 may be essential parts and/or a number of components included in the mobile terminal 100 may vary. Components of the mobile terminal 100 may now be described.

The wireless communication unit 110 may include at least one module that enables radio communication between the mobile terminal 100 and a radio communication system or between the mobile terminal 100 and a network in which the mobile terminal 100 is located. For example, the wireless communication unit 110 may include a broadcasting receiving module 111, a mobile communication module 112, a wireless Internet module 113, a short range communication module 114 (or local area communication module), and a location information module 115 (or position information module).

The broadcasting receiving module 111 may receive broadcasting signals and/or broadcasting related information from an external broadcasting management server through a broadcasting channel. The broadcasting channel may include a satellite channel and a terrestrial channel, and the broadcasting management server may be a server that generates and transmits broadcasting signals and/or broadcasting related information or a server that receives previously created broadcasting signals and/or broadcasting related information and transmits the broadcasting signals and/or broadcasting related information to a terminal.

The broadcasting signals may include not only TV broadcasting signals, radio broadcasting signals, and data broadcasting signals but also signals in the form of a combination of a TV broadcasting signal and a radio broadcasting signal. The broadcasting related information may be information on a broadcasting channel, a broadcasting program or a broadcasting service provider, and may be provided even through a mobile communication network. In the latter case, the broadcasting related information may be received by the mobile communication module 112.

The broadcasting related information may exist in various forms. For example, the broadcasting related information may exist in the form of an electronic program guide (EPG) of a digital multimedia broadcasting (DMB) system or in the form of an electronic service guide (ESG) of a digital video broadcast-handheld (DVB-H) system.

The broadcasting receiving module 111 may receive broadcasting signals using various broadcasting systems. More particularly, the broadcasting receiving module 111 may receive digital broadcasting signals using digital broadcasting systems such as a digital multimedia broadcasting-terrestrial (DMB-T) system, a digital multimedia broadcasting-satellite (DMB-S) system, a media forward link only (MediaFLO) system, a DVB-H and integrated services digital broadcast-terrestrial (ISDB-T) systems. The broadcasting receiving module 111 may receive signals from broadcasting systems providing broadcasting signals other than the above-described digital broadcasting systems.

The broadcasting signals and/or broadcasting related information received through the broadcasting receiving module 111 may be stored in the memory 160. The mobile communication module 112 may transmit/receive a radio signal to/from at least one of a base station, an external terminal and a server on a mobile communication network. The radio signal may include a voice call signal, a video telephony call signal or data in various forms according to transmission and reception of text/multimedia messages.

The wireless Internet module 113 may correspond to a module for wireless Internet access and may be included in the mobile terminal 100 or may be externally attached to the mobile terminal 100. Wireless LAN (WLAN or Wi-Fi), wireless broadband (Wibro), world interoperability for microwave access (Wimax), high speed downlink packet access (HSDPA) and so on may be used as a wireless Internet technique.

The short range communication module 114 may correspond to a module for short range communication. Further, Bluetooth®, radio frequency identification (RFID), infrared data association (IrDA), ultra wideband (UWB) and/or ZigBee® may be used as a short range communication technique.

The location information module 115 may confirm or obtain a location or a position of the mobile terminal 100. The location information module 115 may obtain position information by using a global navigation satellite system (GNSS). The GNSS is a terminology describing a radio navigation satellite system that revolves around the earth and transmits reference signals to predetermined types of radio navigation receivers such that the radio navigation receivers can determine their positions on the earth's surface or near the earth's surface. The GNSS may include a global positioning system (GPS) of the United States, Galileo of Europe, a global orbiting navigational satellite system (GLONASS) of Russia, COMPASS of China, and a quasi-zenith satellite system (QZSS) of Japan, for example.

A global positioning system (GPS) module is a representative example of the location information module 115. The GPS module may calculate information on distances between one point or object and at least three satellites and information on a time when distance information is measured and apply trigonometry to the obtained distance information to obtain three-dimensional position information on the point or object according to latitude, longitude and altitude at a predetermined time.

A method of calculating position and time information using three satellites and correcting the calculated position and time information using another satellite may also be used. Additionally, the GPS module may continuously calculate a current position in real time and calculate velocity information using the location or position information.

The A/V input unit 120 may input (or receive) an audio signal and/or a video signal. The A/V input unit 120 may include a camera 121 and a microphone 122. The camera 121 may process image frames of still images or moving images obtained by an image sensor in a video telephony mode or a photographing mode. The processed image frames may be displayed on a display module 151, which may be a touch screen.

The image frames processed by the camera 121 may be stored in the memory 160 or may be transmitted to an external device through the wireless communication unit 110. The mobile terminal 100 may also include at least two cameras 121.

The microphone 122 may receive an external audio signal in a call mode, a recording mode and/or a speech recognition mode, and the microphone 122 may process the received audio signal into electric audio data. The audio data may then be converted into a form that can be transmitted to a mobile communication base station through the mobile communication module 112 and output in the call mode. The microphone 122 may employ various noise removal algorithms (or noise canceling algorithm) for removing or reducing noise generated when the external audio signal is received.

The user input unit 130 may receive input data for controlling operation of the mobile terminal 100 from a user. The user input unit 130 may include a keypad, a dome switch, a touch pad (constant voltage/capacitance), a jog wheel, a jog switch and/or so on.

The sensing unit 140 may sense a current state of the mobile terminal 100, such as an open/close state of the mobile terminal 100, a position of the mobile terminal 100, whether a user touches the mobile terminal 100, a direction of the mobile terminal 100, and acceleration/deceleration of the mobile terminal 100, and the sensing unit 140 may generate a sensing signal for controlling operation of the mobile terminal 100. For example, in an example of a slide phone, the sensing unit 140 may sense whether the slide phone is opened or closed. Further, the sensing unit 140 may sense whether the power supply unit 190 supplies power and/or whether the interface 170 is connected to an external device. The sensing unit 140 may also include a proximity sensor. The sensing unit 140 may sense a motion of the mobile terminal 100.

The output unit 150 may generate visual, auditory and/or tactile output, and the output unit 150 may include the display module 151, an audio output module 152, an alarm 153 and a haptic module 154. The display module 151 may display information processed by the mobile terminal 100. The display module 151 may display a user interface (UI) and/or a graphic user interface (GUI) related to a telephone call when the mobile terminal 100 is in the call mode. The display module 151 may also display a captured and/or received image, a UI or a GUI when the mobile terminal 100 is in the video telephony mode or the photographing mode.

The display module 151 may include at least one of a liquid crystal display, a thin film transistor liquid crystal display, an organic light-emitting diode display, a flexible display and/or a three-dimensional display. The display module 151 may be of a transparent type or a light transmissive type. That is, the display module 151 may include a transparent display.

The transparent display may be a transparent liquid crystal display. A rear structure of the display module 151 may also be of a light transmissive type. Accordingly, a user may see an object located behind the body (of the mobile terminal 100) through the transparent area of the body of the mobile terminal 100 that is occupied by the display module 151.

The mobile terminal 100 may also include at least two displays 151. For example, the mobile terminal 100 may include a plurality of displays 151 that are arranged on a single face at a predetermined distance or integrated displays. The plurality of displays 151 may also be arranged on different sides.

When the display module 151 and a sensor sensing touch (hereafter referred to as a touch sensor) form a layered structure that is referred to as a touch screen, the display module 151 may be used as an input device in addition to an output device. The touch sensor may be in the form of a touch film, a touch sheet, and/or a touch pad, for example.

The touch sensor may convert a variation in pressure applied to a specific portion of the display module 151 or a variation in capacitance generated at a specific portion of the display module 151 into an electric input signal. The touch sensor may sense pressure of touch as well as position and area of the touch.

When the user applies a touch input to the touch sensor, a signal corresponding to the touch input may be transmitted to a touch controller. The touch controller may then process the signal and transmit data corresponding to the processed signal to the controller 180. Accordingly, the controller 180 may detect a touched portion of the display module 151.

The proximity sensor (of the sensing unit 140) may be located in an internal region of the mobile terminal 100, surrounded by the touch screen, and/or near the touch screen. The proximity sensor may sense an object approaching a predetermined sensing face or an object located near the proximity sensor using an electromagnetic force or infrared rays without having mechanical contact. The proximity sensor may have a lifetime longer than a contact sensor and may thus have a wide application in the mobile terminal 100.

The proximity sensor may include a transmission type photo-electric sensor, a direct reflection type photo-electric sensor, a mirror reflection type photo-electric sensor, a high-frequency oscillating proximity sensor, a capacitive proximity sensor, a magnetic proximity sensor, and/or an infrared proximity sensor. A capacitive touch screen may be constructed such that proximity of a pointer is detected through a variation in an electric field according to the proximity of the pointer. The touch screen (touch sensor) may be classified as a proximity sensor.

For ease of explanation, an action of the pointer approaching the touch screen without actually touching the touch screen may be referred to as a proximity touch and an action of bringing the pointer into contact with the touch screen may be referred to as a contact touch. The proximity touch point of the pointer on the touch screen may correspond to a point of the touch screen at which the pointer is perpendicular to the touch screen.

The proximity sensor may sense the proximity touch and a proximity touch pattern (e.g., a proximity touch distance, a proximity touch direction, a proximity touch velocity, a proximity touch time, a proximity touch position, a proximity touch moving state, etc.). Information corresponding to the sensed proximity touch action and proximity touch pattern may then be displayed on the touch screen.

The audio output module 152 may output audio data received from the wireless communication unit 110 or stored in the memory 160 in a call signal receiving mode, a telephone call mode or a recording mode, a speech recognition mode and a broadcasting receiving mode. The audio output module 152 may output audio signals related to functions, such as a call signal incoming tone and a message incoming tone, performed in the mobile terminal 100. The audio output module 152 may include a receiver, a speaker, a buzzer, and/or the like. The audio output module 152 may output sounds through an earphone jack. The user may hear the sounds by connecting an earphone to the earphone jack.

The alarm 153 may output a signal for indicating generation of an event of the mobile terminal 100. For example, an alarm may be generated when receiving a call signal, receiving a message, inputting a key signal, and/or inputting a touch. The alarm 153 may also output signals in forms different from video signals or audio signals, for example, a signal for indicating generation of an event through vibration. The video signals and/or the audio signals may also be output through the display module 151 or the audio output module 152.

The haptic module 154 may generate various haptic effects that the user can feel. One example of the haptic effects is vibration. An intensity and/or pattern of vibration generated by the haptic module 154 may also be controlled. For example, different vibrations may be combined and output or may be sequentially output.

The haptic module 154 may generate a variety of haptic effects including an effect of stimulus according to an arrangement of pins vertically moving against a contact skin surface, an effect of stimulus according to a jet force or sucking force of air through a jet hole or a sucking hole, an effect of stimulus of rubbing the skin, an effect of stimulus according to contact of an electrode, an effect of stimulus using an electrostatic force, and an effect according to a reproduction of cold and warmth using an element capable of absorbing or radiating heat in addition to vibrations.

The haptic module 154 may not only transmit haptic effects through direct contact but may also allow the user to feel haptic effects through a kinesthetic sense of the user's fingers or arms. The mobile terminal 100 may also include a plurality of haptic modules 154.

The memory 160 may store a program for operations of the controller 180 and/or temporarily store input/output data such as a phone book, messages, still images, and/or moving images. The memory 160 may also store data about vibrations and sounds in various patterns that are output from when a touch input is applied to the touch screen.

The memory 160 may include at least a flash memory, a hard disk type memory, a multimedia card micro type memory, a card type memory, such as SD or XD memory, a random access memory (RAM), a static RAM (SRAM), a read-only memory (ROM), an electrically erasable programmable ROM (EEPROM), a programmable ROM (PROM) magnetic memory, a magnetic disk and/or an optical disk. The mobile terminal 100 may also operate in relation to a web storage that performs a storing function of the memory 160 on the Internet.

The interface 170 may serve as a path to external devices connected to the mobile terminal 100. The interface 170 may receive data from the external devices or power and transmit the data or power to internal components of the mobile terminal 100 or transmit data of the mobile terminal 100 to the external devices. For example, the interface 170 may include a wired/wireless headset port, an external charger port, a wired/wireless data port, a memory card port, a port for connecting a device having a user identification module, an audio I/O port, a video I/O port, and/or an earphone port.

The interface 170 may also interface with a user identification module that is a chip that stores information for authenticating authority to use the mobile terminal 100. For example, the user identification module may be a user identify module (UIM), a subscriber identify module (SIM) and/or a universal subscriber identify module (USIM). An identification device (including the user identification module) may also be manufactured in the form of a smart card. Accordingly, the identification device may be connected to the mobile terminal 100 through a port of the interface 170.

The interface 170 may also be a path through which power from an external cradle is provided to the mobile terminal 100 when the mobile terminal 100 is connected to the external cradle or a path through which various command signals input by the user through the cradle are transmitted to the mobile terminal 100. The various command signals or power input from the cradle may be used as signals for confirming whether the mobile terminal 100 is correctly set in the cradle.

The controller 180 may control overall operations of the mobile terminal 100. For example, the controller 180 may perform control and processing for voice communication, data communication and/or video telephony. The controller 180 may also include a multimedia module 181 for playing multimedia. The multimedia module 181 may be included in the controller 180 or may be separated from the controller 180.

The controller 180 may perform a pattern recognition process capable of recognizing handwriting input or picture-drawing input applied to the touch screen as characters or images. The power supply unit 190 may receive external power and internal power and provide power required for operations of the components of the mobile terminal 100 under control of the controller 180.

According to hardware implementation, embodiments may be implemented using at least one of application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, and/or electrical units for executing functions. Embodiments may be implemented by the controller 180.

According to software implementation, embodiments such as procedures or functions may be implemented with a separate software module that executes at least one function or operation. Software codes may be implemented according to a software application written in an appropriate software language. The software codes may be stored in the memory 160 and executed by the controller 180.

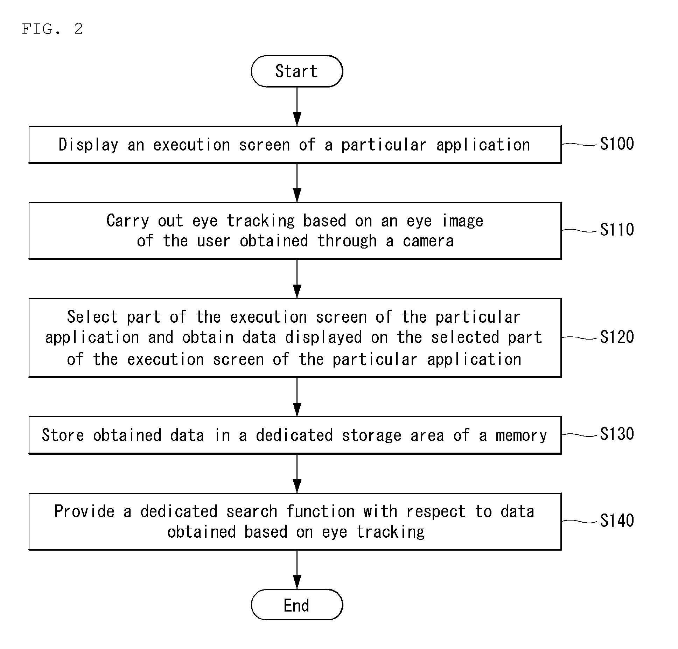

Up to this point, a structure of the mobile terminal 100 according to the present invention has been described with reference to FIG. 1. In what follows, a user interface function utilizing an eye tracking result provided by the mobile terminal 100 according to the present invention will be described in more detail with reference to FIGs. 2 to 23.

FIG. 2 shows a flow diagram illustrating one example of a method for controlling a mobile terminal according to the present invention. In what follows, the method for controlling a mobile terminal will be described with reference to related drawings.

First, the controller 180 displays an execution screen of a particular application on the display unit 151, S100. Next, the controller 180 controls the camera 121 to obtain an eye image of the user. Next, the controller 180 carries out eye tracking which obtains a position of the user's glance at an execution screen of the particular application based on the eye image of the user obtained through the camera 121, S110.

Then the controller 180 selects part of the execution screen of the particular application based on an eye tracking result and obtains data displayed on part of the execution screen of the selected particular application S120. At this time, the controller 180 can select part of the execution screen of the particular application based on a position at which the user's glance stays for more than a predetermined period of time and a position at which the user's glance is recognized for more than a predetermined number of times.

The controller 180 stores data obtained from the eye tracking result in the storage unit 160, S130. The area in which the obtained data are stored can be a dedicated storage area of the storage unit 160 allocated to store data obtained based on eye tracking.

If the obtained data are stored, the controller 180 can provide a dedicated search function with respect to the data obtained based on the eye tracking S140. For example, if a search based on the keyword related to the obtained data is requested, the controller 180 can search the obtained data and display the search result on the display unit 151. Meanwhile, in case the obtained data are stored in a dedicated storage area of the storage unit 160, the search range of the dedicated search function can be limited to the dedicated storage area.

Although not shown in FIG. 2, the mobile terminal 100 according to the present invention can obtain various types of additional information related to part of the execution screen of a particular application selected from an eye tracking result and store the additional information in the storage unit 160 by associating the information with the obtained data. The obtained additional information can also be stored in the dedicated storage area.

The additional information with respect to the obtained data can include information about the particular application, information about the content carried out by the particular application, acquisition time of the obtained data, and so on. However, it should be noted that the technical scope of the present invention is not limited to what are described above.

If a search based on a keyword corresponding to the additional information of the obtained data is requested, the controller 180 searches the obtained data and displays a search result on the display unit 151. For example, if a search based on a keyword corresponding to the name of the content carried out by the particular application is requested, the controller searches the obtained data and displays a search result on the display unit 151.

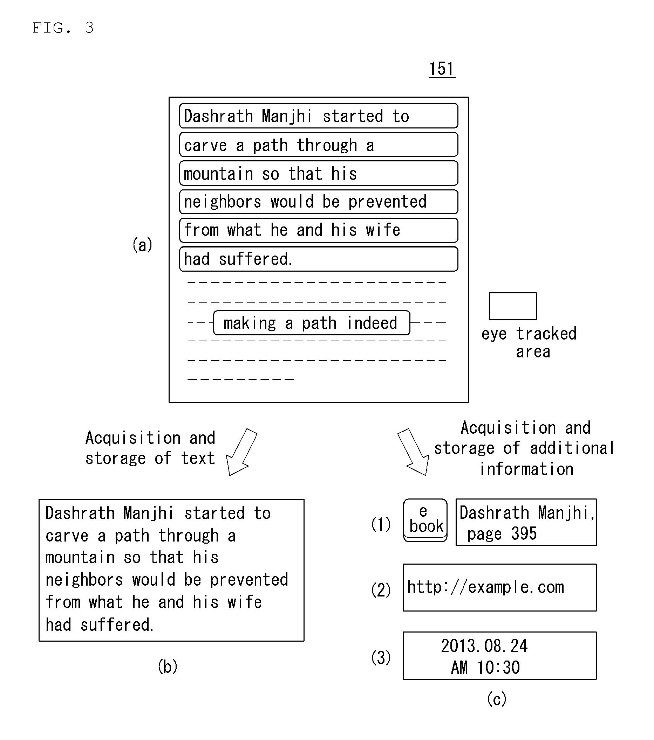

FIG. 3 shows an example where data are obtained and stored based on eye tracking according to a method for controlling a mobile terminal of FIG. 2.

FIG. 3(a) shows a case where part of a screen of the display unit 151 is selected from an eye tracking result based on the user's glance while an article related to an Indian, Dashrath Manjhi is displayed on the display unit 151. Then the controller 180 can obtain the text displayed in the selected area and store the text in a dedicated storage area of the storage unit 160.

FIG. 3(b) shows an example where a sentence of "Dashrath Manjhi started to carve a path through a mountain so that his neighbors would be prevented from what he and his wife had suffered." and a phrase of "making a path indeed" from the article are obtained and stored as an eye tracking result.

FIG. 3(c) shows an example where text is selected and stored as a result of the eye tracking and additional information related to the obtained text is obtained and stored at the same time.

The case (1) illustrates that in case an e-book called *"Dashrath Manjhi* is opened by an e-book application, the additional information obtained and stored can include an "icon of an e-book application" representing an execution application, its title "Dashrath Manjhi", and "page 395" which is a current page displayed on the screen.

The case (2) illustrates that in case the article is the writing posted in a particular web page, the additional information obtained and stored can include http://example.com which represents the particular web page.

The case (3) illustrates that "2013.08.24 AM 10:30", which represents the time at which text and additional information are obtained from the writing, can be obtained and stored as additional information.

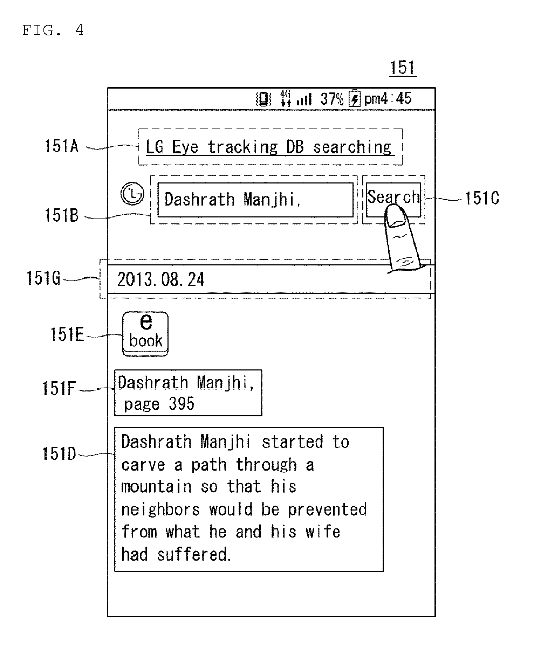

FIG. 4 shows an example of a user interface provided according as a search function dedicated to obtained data based on eye tracking provided by a mobile terminal 100 according to the present invention is carried out. It should be noted that the example of FIG. 4 illustrates a case where a dedicated search function is carried out while text and its additional information are obtained and stored based on eye tracking according to the embodiment of FIG. 3.

In the user interface, shown is a phrase 151A indicating that a search dedicated to the data obtained based on eye tracking is carried out. Also, a search keyword input window 151B and a search execution button 151C are displayed on the user interface.

If the user inputs "Dashrath Manjhi" to the search keyword input window 151B and touches the search execution button 151C, the controller 180, from the eye tracking result including the search keyword "Dashrath Manjhi", determines that the user has already opened the e-book and searches and displays the stored text 151D. And the controller 180 also displays the additional information of the text 151D on the screen, which includes "icon 151E of the e-book application", title and a current page of the e-book, "Dashrath Manjhi, page 395" 151F, and "2013.08.24" 151G which is the acquisition time of data based on eye tracking.

As described with reference to FIG. 3, the mobile terminal 100 according to the present invention, in case data obtained based on eye tracking are displayed on the display unit 151 as a result of a dedicated search, can also display the additional information about the obtained data.

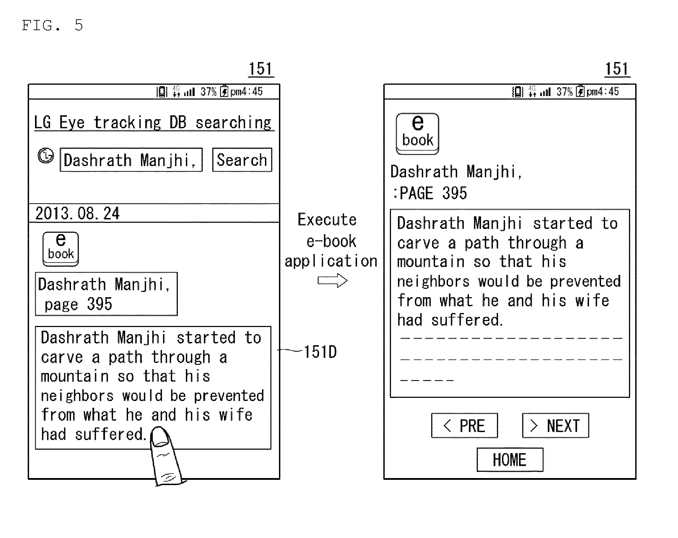

FIG. 5 show an example of providing the original content that the user has read based on a search result from obtained data based on eye tracking in a mobile terminal 100 according to the present invention.

FIG. 5(a) shows a situation where the user finds the part of page 395 of "Dashrath Manjhi" that the user has read, by using the search keyword "Dashrath Manjhi", which reads "Dashrath Manjhi started to carve a path through a mountain so that his neighbors would be prevented from what he and his wife had suffered".

If the user touches and selects the search result while in the state of FIG. 5(a), as shown in FIG. 5(b), the controller 180, by executing an e-book application, can display page 395 of the e-book "Dashrath Manjhi" which includes the searched text. At this time, the path information leading to the page, being associated with the searched text, can be stored in a dedicated storage area of the storage unit 160 for data obtained based on eye tracking.

Meanwhile, in case the text part of a particular web page that the user has read is obtained and stored, a network address leading to the particular web page can be matched to the text part and stored in the dedicated storage area. Then if the text part is searched and selected afterwards, the controller 180 can provide the user with the particular web page based on the network address.

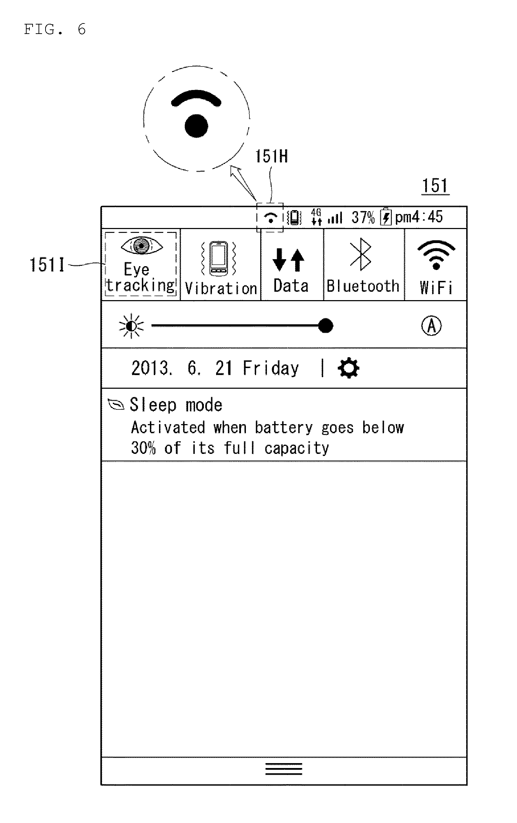

FIGs. 6 to 9 show examples of a user interface related to eye tracking provided by a mobile terminal 100 according to the present invention.

As shown in FIG. 6, the mobile terminal 100 can display the icon 151H, which indicates that an eye tracking function is currently under execution, on a notification bar. Also, the mobile terminal 100 can display on the notification window a selection area 151 H for executing a setting function related to eye tracking.

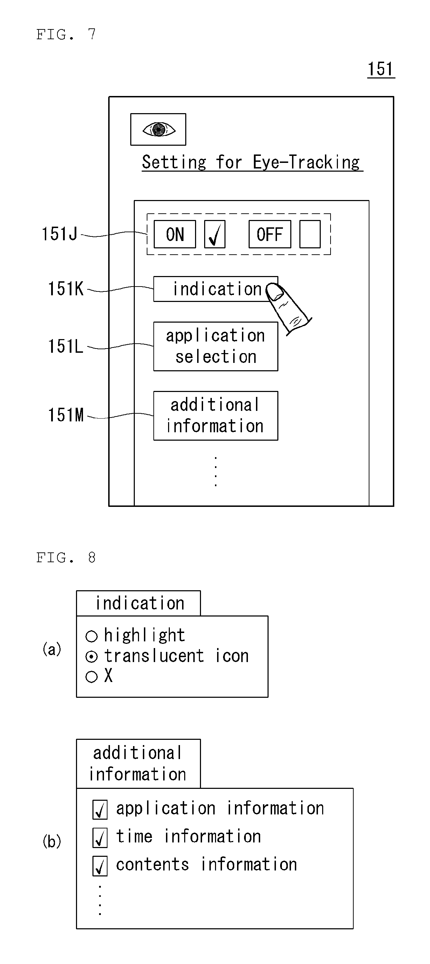

As shown in FIG. 6, the user touches the selection area 151H. Then, as shown in FIG. 7, the controller 180 displays on the display unit 151 a screen for eye tracking related setting.

To examine the screen, the mobile terminal 100 provides a user interface 151J to set on/off of an eye tracking related function, a user interface 151K to set an indicating means representing execution of eye tracking, a user interface 151L to set a target application which executes eye tracking, and a user interface 151M to set additional information obtained according as eye tracking is carried out. However, types of eye tracking related setting provided by the mobile terminal 100 according to the present invention are not limited to the aforementioned examples.

If the user touches the user interface 151K, as shown in FIG. 8(a), the controller 180 can provide a user interface capable of setting a screen to display a highlighted or translucent icon as an indicating means to represent execution of eye tracking.

If the user touches the user interface 151M, as shown in FIG. 8(b), the controller 180 can provide a user interface through which the user can select application related information, data acquisition time related information, information related to content under execution, and the like as additional information about data obtained from a particular application execution screen as a result of eye tracking.

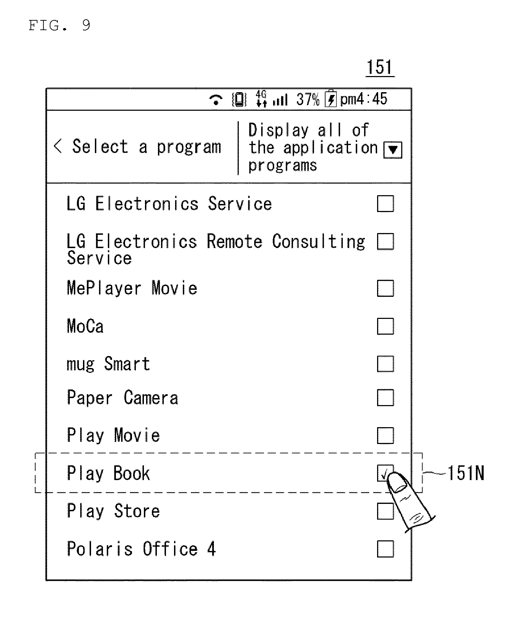

If the user touches the user interface 151L, as shown in FIG. 9, the controller 180 can display on the display unit 151 a user interface for selecting a target application which obtains data according to an eye tracking result.

As shown in FIG. 9, if the user selects "play book" and a playbook application is executed, the controller 180 performs eye tracking with respect to an execution screen of the playbook application and obtains and stores data from the execution screen of the playbook application as a result of eye tracking. Moreover, the controller 180 can further obtain additional information of the data obtained from the execution screen of the playbook application and store the information in the storage unit 160.

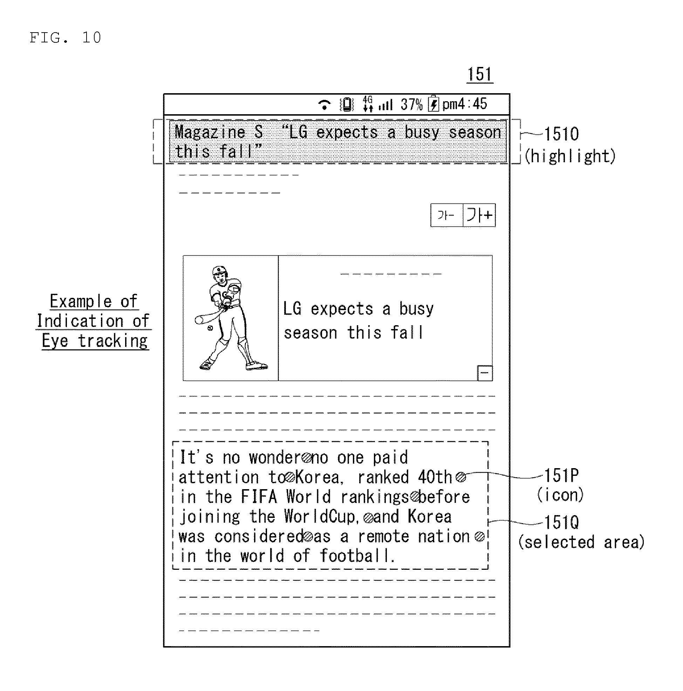

FIG. 10 show examples of displaying a means indicating that eye tracking is under execution in a mobile terminal 100 according to the present invention.

From the result of eye tracking, the controller 180 of the mobile terminal 100 can highlight 151O the part at which the user glances for more than a predetermined period of time or for more than a predetermined number of times. Also, the controller 180 can display 151P a translucent icon at the position where the user glances for more than a predetermined period of time or for more than a predetermined number of times from the result of eye tracking and determine a particular area 151 Q of the screen according to the eye tracking result.

The methods for indicating execution of eye tracking illustrated in FIG. 10 are only examples of an indicating method provided by a mobile terminal 100 according to the present invention, and it should be note that the technical scope of the present invention is not limited to the examples.

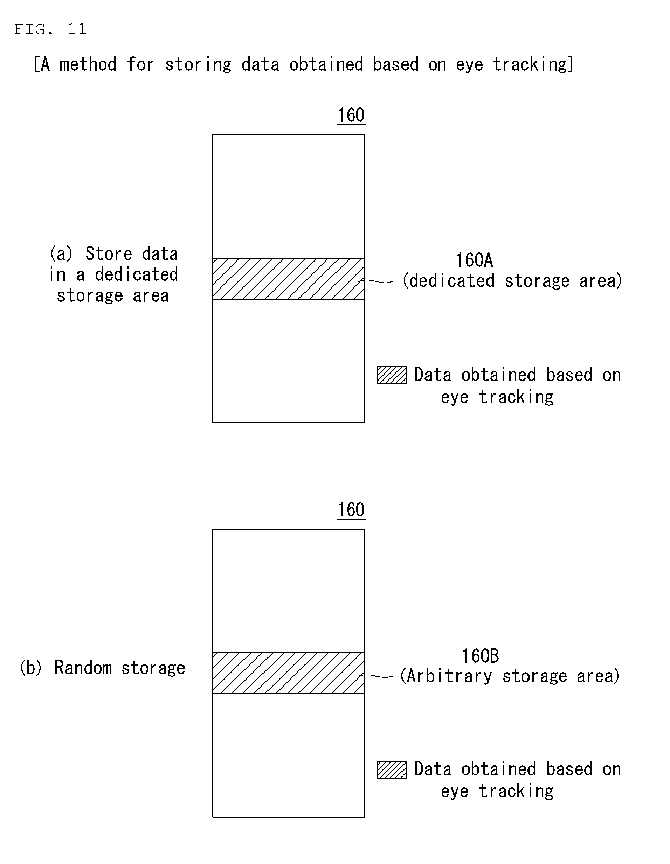

FIG. 11 illustrates examples of storing data obtained according to the user's glance as a result of eye tracking in a storage unit 160 in a mobile terminal 100 according to the present invention.

With reference to FIG. 11(a), it can be known that the controller 180 of the mobile terminal 100 can store the data obtained from a result of eye tracking in a dedicated storage area 160A of the storage unit 160. At this time, the controller 180 can also obtain additional information of the obtained data and store the obtained additional information in the dedicated storage area 160A.

Then, at the time of a search for the data obtained from an eye tracking result, the controller 180 can limit the search range to the dedicated search area 160. As a result, a faster search can be carried out.

With reference to FIG. 11(b), it can be known that the controller 180 can store the data obtained from an eye tracking result in an arbitrary area 160B of the storage unit 160. At this time, the controller 180 can store additional information, which indicates that the obtained data are come from an eye tracking result, is stored in association with the obtained data. Then, at the time of a search for the data obtained from an eye tracking result, the controller 180 can limit the target of a dedicated search with respect to the data obtained from an eye tracking result to those data associated with the additional information.

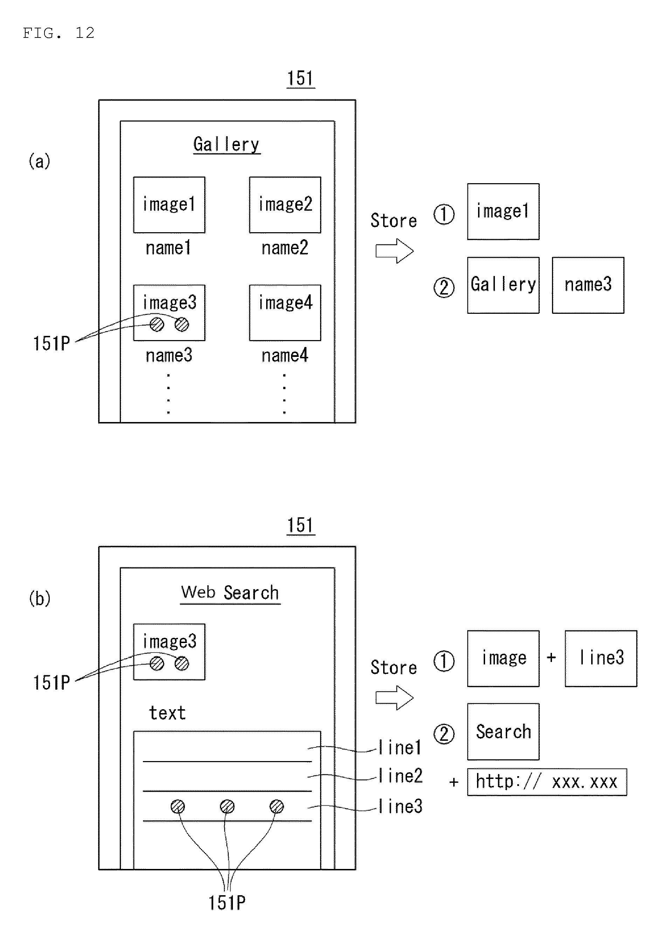

FIG. 12 shows other examples where data are obtained through an execution screen of a particular application from an eye tracking result in a mobile terminal 100 according to the present invention.

With reference to FIG. 12(a), if the user's glance is recognized for more than a predetermined period of time at a particular image displayed on an execution screen of a gallery application, the controller 180 displays a translucent icon 151P which indicates that eye tracking is currently executed over the image.

And the controller 180 can store the particular image selected by the user's glance in the storage unit 160 as the data obtained from an eye tracking result ①. Then the controller 180 can also store the application name and the name of a selected image file as additional information with respect to the particular image ②.

Meanwhile, the particular image can be found from a request for a dedicated search with respect to the data obtained based on eye tracking, which uses a word corresponding to the additional information as a search keyword, and provided to the user.

With reference to FIG. 12(b), the user's glance at a particular image is recognized from an execution screen of a web browsing application, and the user's glance is recognized at the third line (line 3) in a text display area.

Then the controller 180 can store the image and the text displayed in the third line (line 3) in the storage unit 160 as the data obtained as a result of eye tracking. And the controller 180 can also store the name of the web browsing application and the Uniform Resource Locator (URL) corresponding to the execution screen in the storage unit 160 as additional information about the stored data.

Meanwhile, the controller 180 searches for the particular image and the text based on a request for a dedicated search with respect to the data obtained based on eye tracking, which uses a word corresponding to the additional information as a search keyword and provides the searched image and text to the user.

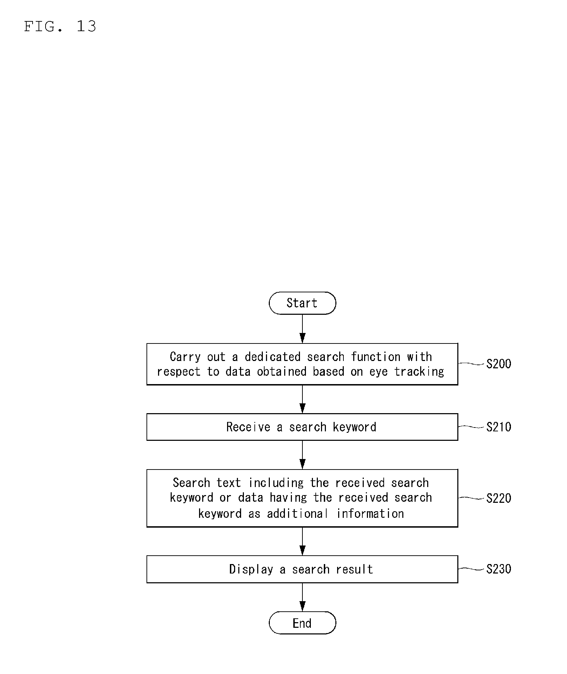

FIG. 13 is a flow diagram illustrating another example of a method for controlling a mobile terminal 100 according to the present invention. In what follows, the method for controlling a mobile terminal will be described with reference to related drawings.

While the data obtained based on eye tracking is stored in the storage unit 160, the controller 180 carries out a dedicated search function with respect to the data obtained based on eye tracking S200. If the dedicated search function is carried out and a search keyword is received through a user interface provided S210, the controller 180 searches for the text including the received search keyword or the data having the received search keyword as additional information S220. The search range based on the received search keyword can be limited to the dedicated storage area allocated for storing data obtained based on eye tracking.

If the search is completed, as shown in FIG. 3, the controller 180 can display on the display unit 151 the searched data together with additional information corresponding to the data S230.

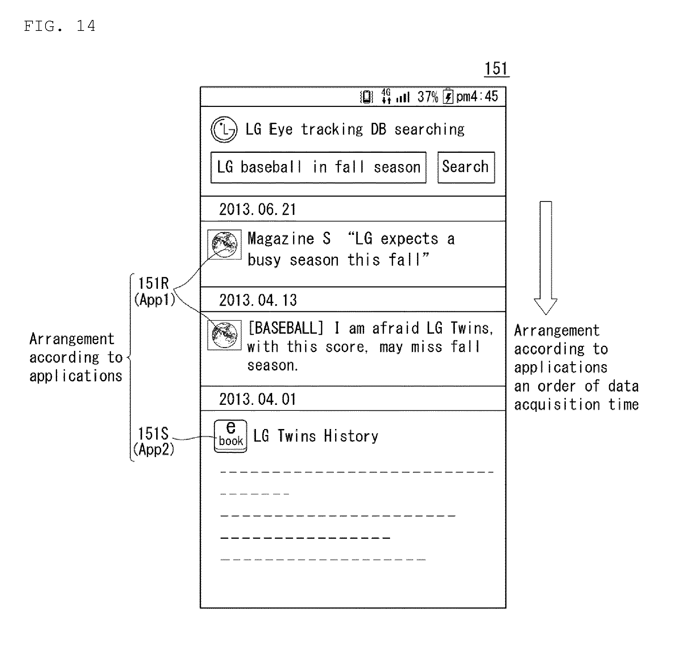

FIG. 14 shows one example of a result of dedicated search with respect to data obtained from eye tracking provided by a mobile terminal 100 according to the present invention.

With reference to FIG. 14, the mobile terminal 100 can arrange a dedicated search result with respect to the data obtained based on eye tracking which uses "LG baseball in fall season" as a search keyword in a data acquisition order based on eye tracking, or the dedicated search result can be classified and stored according to the application employed for data acquisition. More specifically, the controller 180 of FIG. 14 provides a search result by classifying the search result to correspond to a web browsing application 151R and an e-book application 151S.

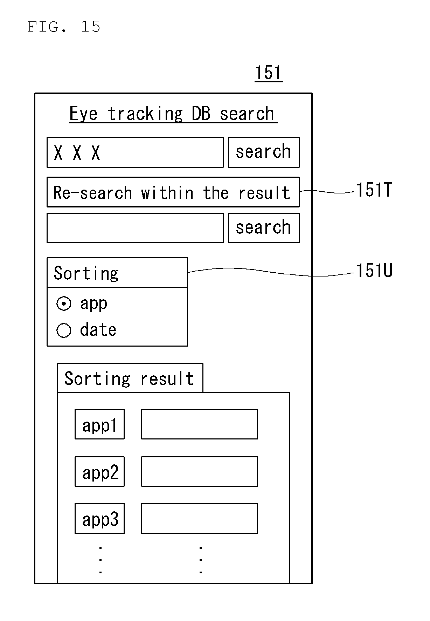

FIGs. 15 to 17 show examples of additional functions utilizing a result of dedicated search with respect to data obtained based on eye tracking, provided by a mobile terminal 100 according to the present invention.

With reference to FIG. 15, the mobile terminal 100 provides a search keyword input window 151T for carrying out a re-search function with respect to the dedicated search result. Also, the mobile terminal 100 provides a user interface 151U for selecting a sorting criterion with respect to the dedicated search result. According to FIG. 15, the mobile terminal 100 provides a sorting function employing a criterion based on applications or data acquisition time; however, the technical scope of the present invention is not limited to this example.

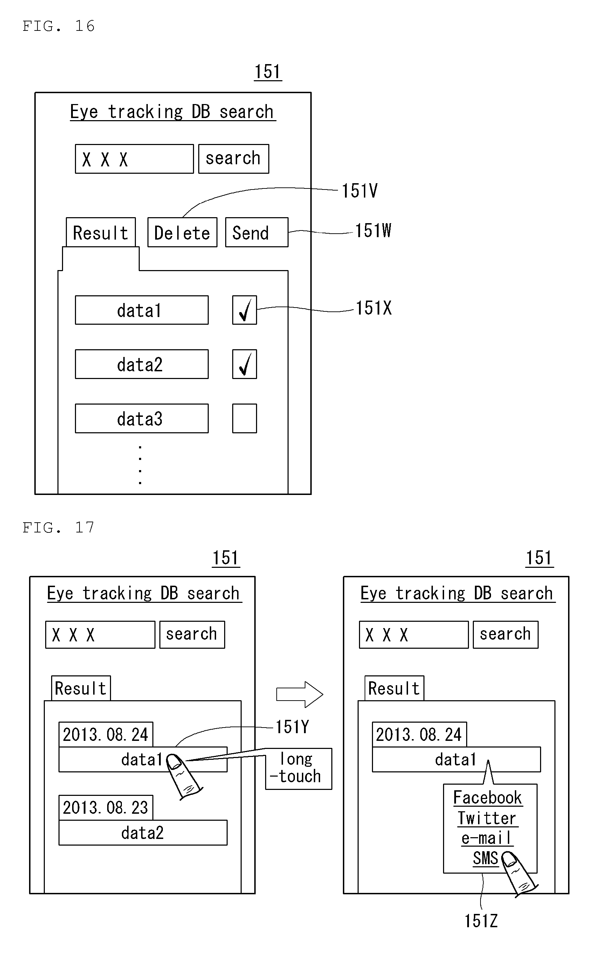

With reference to FIG. 16, the mobile terminal 100 provides a button 151V intended to delete data included in the dedicated search result and a button 151 W intended to send the data to other electronic devices. Methods for sending searched data to other electronic devices include e-mail, SMS, MMS, SNS, and the like. However, the technical scope of the present invention is not limited to the above examples. Meanwhile, the user can determine selection of each data through a checkbox 151X located next to the searched data.

With reference to FIG. 17, if the user selects particular data 151Y by making a long touch on the particular data from a screen displaying the dedicated search result, the controller 100 provides a user interface 151Z for sending the selected particular data 151Y to other electronic devices by using various applications.

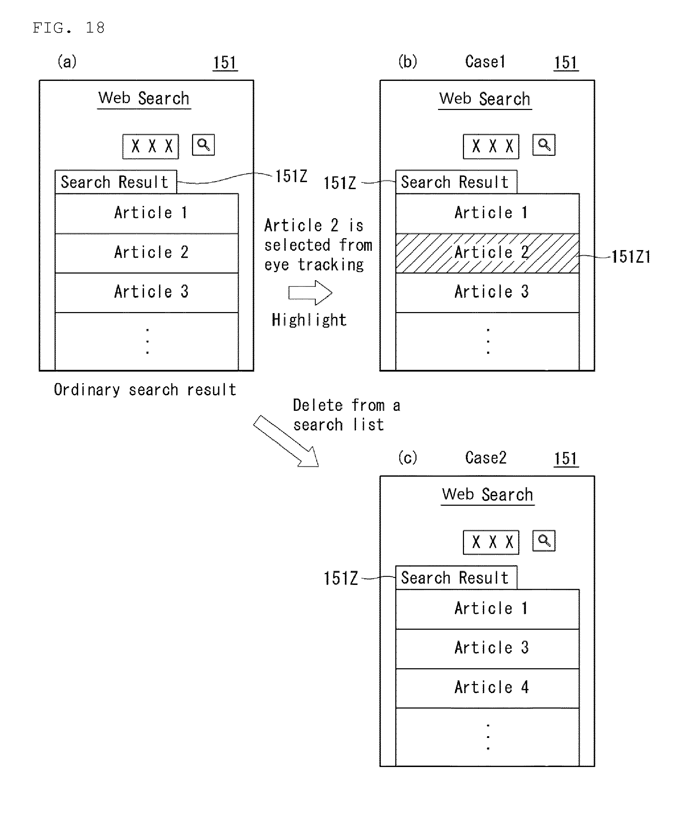

FIG. 18 shows examples where items displayed on an execution screen of a particular application are changed according to an eye tracking result in a mobile terminal 100 according to the present invention.

FIG. 18(a) shows an ordinary search result with respect to a particular search keyword, provided by a web browsing application "NAVER". In this example, it is assumed that the user's glance is recognized at the second article (Article 2) from among the search result of FIG. 18(a) and thus the data of the second article is obtained and stored.

Then, as shown in FIG. 18(b), the mobile terminal 100 can display the second article 151Z1, determined to have been read by the user, differently from the other articles in the next search using the same web browsing application "NAVER" based on the particular search keyword (case 1).

Also, as shown in FIG. 18(c), the mobile terminal 100 may not display the second article, determined to have been read by the user, on the screen in the next search using the same web browsing application "NAVER" based on the particular search keyword (case 2).

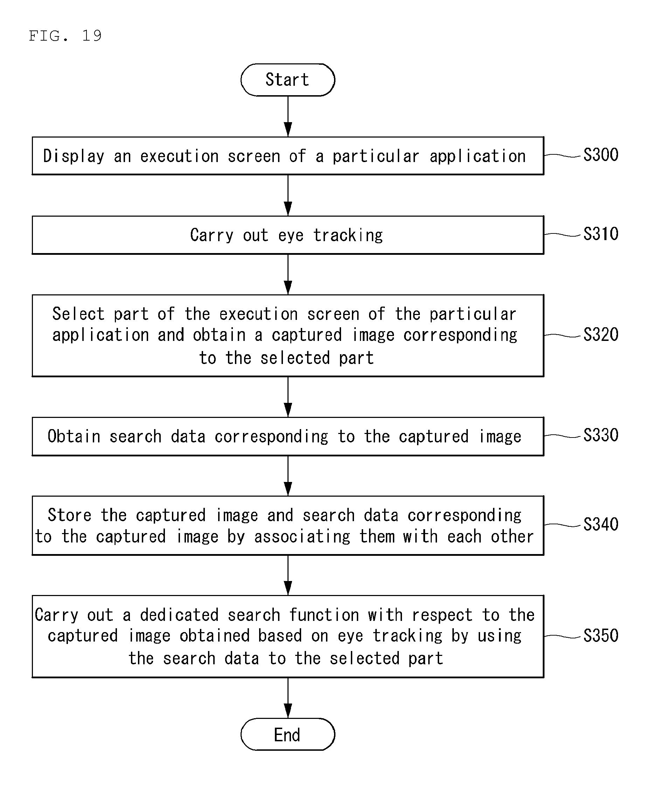

FIG. 19 is a flow diagram illustrating a yet another example of a method for controlling a mobile terminal 100 according to the present invention. In what follows, the method for controlling a mobile terminal will be described with reference to related drawings.

First, the controller 180 displays an execution screen of a particular application on the display unit 151, S300. Then the controller 180 controls the camera 121 to obtain the image of the user's eye. Afterwards, the controller 180 performs eye tracking which obtains the position at which the user glances in the execution screen of the particular application based on the image of the user's eye obtained through the camera 121, S310.

Next, the controller 180 selects part of the execution screen of the particular application based on an eye tracking result and obtains a capture image of the selected part of the execution screen of the particular application S320. At this time, the controller 180 can select part of the execution screen of the particular application based on the position at which the user glances for more than a predetermined period of time or for more than a predetermined number of times.

An the controller 180 obtains search data corresponding to the obtained capture image S330 and stores the obtained search data in the storage unit 160 by associating the obtained search data with the capture image S340. At this time, the capture image and the obtained search data can be stored in a dedicated storage area of the storage unit 160 allocated for storing data obtained based on eye tracking.

Meanwhile, the obtained search data can include information related to the particular application, information related to the content under execution by the particular application, information related to acquisition time of the capture image, and information about the path corresponding to the execution screen of the particular application. In other words, the search data corresponding to a capture image obtained by the method for controlling a mobile terminal as illustrated in FIG. 19 can be the data corresponding to additional information of the data obtained based on eye tracking of the method for controlling a mobile terminal as illustrated in FIG. 2.

Next, if a request for a dedicated search with respect to the data obtained based on eye tracking by using a search keyword corresponding to the search information obtained and stored as described above is made, the controller 180 can search the storage unit 160 for the capture image to display the capture image on the display unit 151, S350. For example, if a request for a search is made by using the name of the content executed by the particular application as a search keyword, the controller 180 searches for a captured image in the execution screen of the particular application which plays the aforementioned content and displays the captured image on the display unit 151.

Meanwhile, the captured image obtained as a result of eye tracking and a search image corresponding to the captured image are stored in the dedicated storage area being associated with each other, the controller 180 can limit the search range of the requested dedicated search to the dedicated storage area.

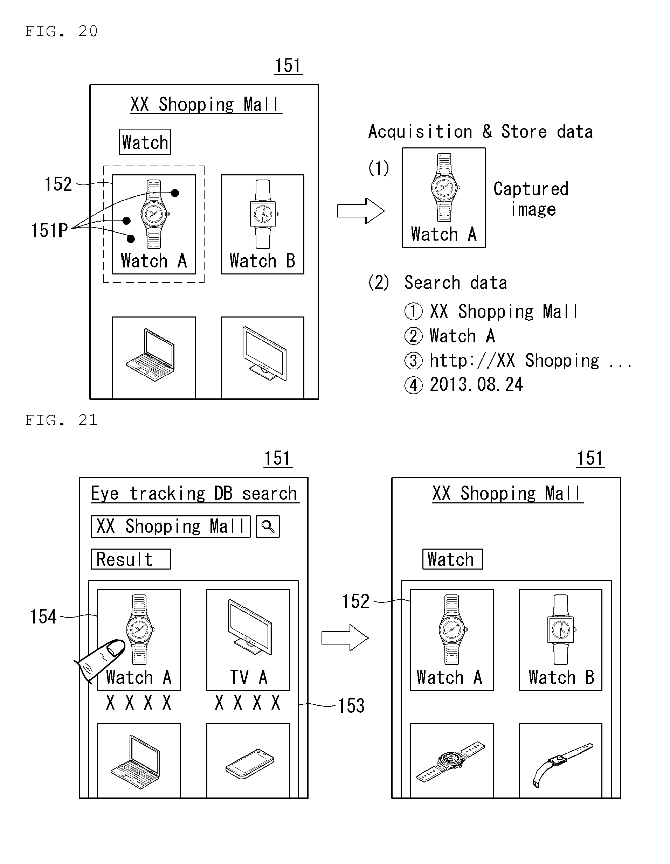

FIGs. 20 to 22 illustrate one example of a process where a method for controlling a mobile terminal of FIG. 19 is carried out.

FIG. 20 shows a case where in case the user's glace is recognized at the image of a particular watch 152 in a web page provided by a particular shopping mall as a result of eye tracking based on the analysis of the eye image of the user, the controller 180 of the mobile terminal 100 obtains a captured image of the particular watch 152 and stores the captured image in the storage unit 160; and at the same time, obtains search information including a shopping mall name, name of the watch, URL of the web page, and image capture time as search data with respect to the obtained capture image and stores the search information in the storage unit 160. At this time, the captured image and the search data corresponding to the captured image can be stored in a dedicated storage area of the storage unit 160 allocated for storing the data obtained based on eye tracking.

FIG. 21 shows a case where, while a dedicated search function using the name of the particular shopping mall as a search keyword has been activated with respect to the data obtained based on eye tracking, if the user selects a captured image 153 of the particular watch from among a plurality of capture images displayed as a result of the search, the controller 180 provides a particular web page of the particular shopping mall, from which the image of the particular watch has been captured.

In other words, the mobile terminal 100 according to the present invention stores the path information corresponding to an execution screen of the particular application, from which an image is captured, not only as search information corresponding to the captured image but also as a means to provide the execution screen of the particular application.

At this time, based on the path information of a web page, from which the image of the particular watch is captured, the controller 180 can display the web page on the display unit 151, where the image of the particular watch is stored as search data with respect to the captured image of the particular watch.

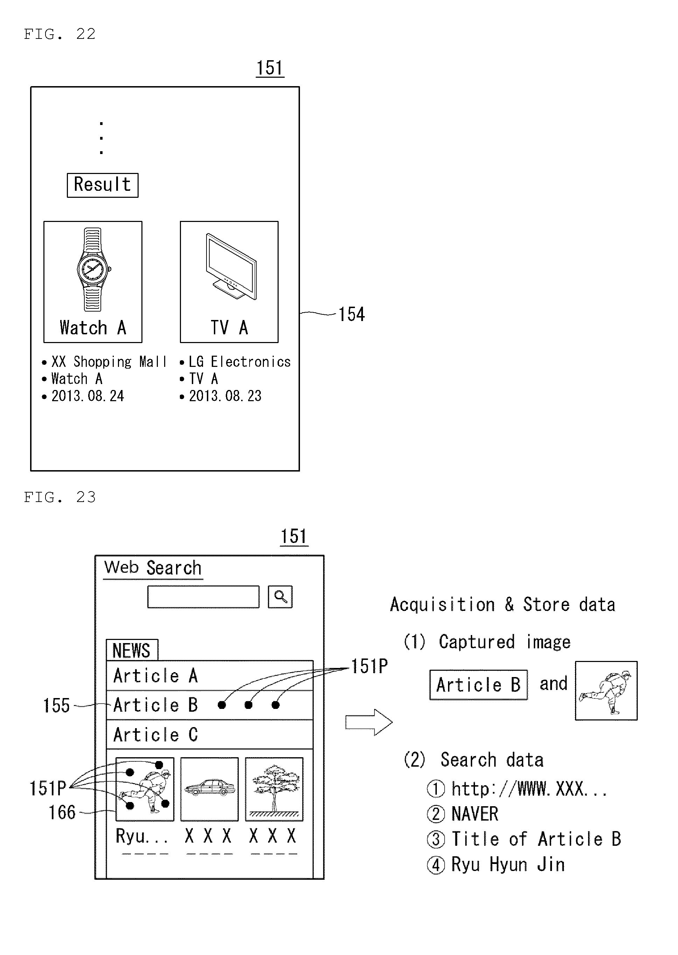

FIG. 22 shows a magnified view of an execution screen of a dedicated search function which uses the name of the particular shopping mall as a search keyword with respect to the data obtained based on eye tracking shown in FIG. 21. With reference to FIG. 22, it can be known that as a result of the dedicated search, images of a plurality of products captured from the web page of the particular shopping mall are displayed on the display unit 151. Furthermore, for each of the captured images, the corresponding search data such as the product name and image capture time are displayed together. Meanwhile, the search image displayed together with a captured image of a product can be part or the whole of the entire search data corresponding to the captured image of the corresponding product.

FIG. 23 illustrates a still another example of data acquisition and storage based on eye tracking carried out in a mobile terminal 100 according to the present invention.

The user's glance at the text corresponding to a particular article and a particular image in an execution screen of a web browsing application is recognized from eye tracking. Then, the controller 180 of the mobile terminal 100 can obtain and store a captured image corresponding to the text of the particular article and a captured image corresponding to the particular image. Meanwhile, the controller 180 can store the text of the particular article in the form of text rather than a captured image.

And the controller 180 can store URL of the execution screen of the web browsing application, name of the web browsing application, title of the captured article, and text corresponding to the captured image as search data corresponding to the captured images obtained and stored as described above.

Meanwhile, the controller 180 can store the captured images and the corresponding search information in a dedicated storage area allocated for storing data obtained based on eye tracking. Afterwards, if a dedicated search is carried out with respect to the data obtained based on eye tracking under the aforementioned condition, the controller 180 can limit the search range to the dedicated storage area.

The above-described method of controlling the mobile terminal may be written as computer programs and may be implemented in digital microprocessors that execute the programs using a computer readable recording medium. The method of controlling the mobile terminal may be executed through software. The software may include code segments that perform required tasks. Programs or code segments may also be stored in a processor readable medium or may be transmitted according to a computer data signal combined with a carrier through a transmission medium or communication network.

The computer readable recording medium may be any data storage device that can store data that can be thereafter read by a computer system. Examples of the computer readable recording medium may include read-only memory (ROM), random-access memory (RAM), CD-ROMs, DVD±ROM, DVD-RAM, magnetic tapes, floppy disks, optical data storage devices. The computer readable recording medium may also be distributed over network coupled computer systems so that the computer readable code is stored and executed in a distribution fashion.

A mobile terminal may include a first touch screen configured to display a first object, a second touch screen configured to display a second object, and a controller configured to receive a first touch input applied to the first object and to link the first object to a function corresponding to the second object when receiving a second touch input applied to the second object while the first touch input is maintained.

A method may be provided of controlling a mobile terminal that includes displaying a first object on the first touch screen, displaying a second object on the second touch screen, receiving a first touch input applied to the first object, and linking the first object to a function corresponding to the second object when a second touch input applied to the second object is received while the first touch input is maintained.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A mobile terminal, comprising:
a camera;
a display;
a memory; and
a controller configured to:
cause the display to display an execution screen of an application;
tracka movement of an eye of a user via image data captured by the camera;
select a portion of the execution screen based on the movement of the eye;
selectdata displayed on the selected portion and cause the memory to store the selected data; and
perform a dedicated search function with a search query comprising the selected data.

2. The mobile terminal of claim 1, wherein the controller is further configured to:
cause the memory to store the selected data in a dedicated storage region of the memory, wherein the dedicated storage region is assigned to store data associated with eye tracking; and
limit a search range of the dedicated search function to the dedicated storage region.

3. The mobile terminal as claimed in any one of claims 1 to 2, wherein the controller is further configured to select the portion of the execution screen based on at least a length of time that the eye of the user is directed at the portion or a number of times the eye of the user is directed at the portion.

4. The mobile terminal of claim 3, wherein the controller is further configured to cause the display to display an indicator on the execution screen indicating that an eye tracking function is activated.

5. The mobile terminal of claim 2, wherein the controller is further configured to cause the memory to store path information in the dedicated storage region to be associated with the stored selected data, wherein the path information corresponds to the execution screen; and
cause the display to display the execution screen in response to an input selecting the selected data when the selected data is provided as a search result of a search.

6. The mobile terminal of claim 2, wherein the controller is further configured to:
cause the memory to store text displayed in the selected portion of the execution screen in the dedicated storage region to be associated with the selected data; and
provide the selected portion as a search result when a search query includes the stored text.

7. The mobile terminal of claim 2, wherein the controller is further configured to:
obtain additional data related to the selected data, the additional data including at least information related to the application, information related to content executed by the application, or information related to a time and date the selected data was selected; and
store the additional data in the dedicated storage region to be associated with the selected data.

8. The mobile terminal of claims 5 to 7, wherein the controller is further configured to perform the dedicated search function using a search query comprising the additional data.

9. The mobile terminal of claims 5 to 8, wherein the controller is further configured to:
cause the memory to store in the dedicated storage regionan image displayed on the execution screen; and
provide the stored image as a search result when a search query includes information included in the additional data.

10. The mobile terminal of claims 5 to 9, wherein the controller is further configured to cause the display to display the additional data along with the selected data when the selected data is provided as a search result of a search.

11. The mobile terminal of claims 5 to 10, wherein the controller is further configured to perform a refining search within results of a search wherein a query of the refining search includes the additional data.

12. The mobile terminal as claimed in any one of claims 1 to 11, wherein the controller is further configured to:
performing a search using the captured image and obtaining search result data corresponding to the captured image;
causing the memory to store the captured image and the search result data to be associated with each other; and
providing the captured image and the search result data as search results for a dedicated search function.

13. The mobile terminal as claimed in any one of claims 1 to 12, wherein the controller is further configured to cause the display to display the captured image as a search result when a search query includes information related to the search result data;and
, wherein the search result data corresponding to the captured image includes path information corresponding to the execution screen; and
the controller is further configured to cause the display to display the execution screen in response to an input selecting the displayed captured image.

14. The mobile terminal as claimed in any one of claims 1 to 13, wherein the controller is further configured to cause the memory to store additional data related to the search result data, the additional data including at least information related to the application, information related to content executed by the application, or information related to a time and date the portion of the execution screen was selected.

15. A control method of a mobile terminal, the control method comprising:
displaying an execution screen of an application;
tracking a movement of an eye of a user via image data captured by a camera;
selecting a portion of the execution screen based on the movement of the eye;
selecting data displayed on the selected portion and cause a memory to store the selected data; and
performing a dedicated search function with a search query comprising the selected data.
